# EUROPÄISCHE PATENTANMELDUNG

(11) **EP 0 959 606 A2**
(43) Veröffentlichungstag der Anmeldung: **24.11.1999**
(21) Anmeldenummer: 99106484.1
(22) Anmeldetag: 30.03.1999
(51) Int. Cl.: H04M 11/00

(54) **Telekommunikationseinrichtung**

(30) Priorität: 16.05.1998 DE 19822071
(71) Anmelder: ROBERT BOSCH GMBH, 70442 Stuttgart (DE)
(72) Erfinder: Kohlenberger, Achim, 64297 Darmstadt (DE); Steuer, Manfred, 65719 Hofheim (DE)

(57) **Zusammenfassung**

Die Erfindung betrifft eine Telekommunikationseinrichtung, die wenigstens ein lokales Zentralmodul, eine Recheneinheit und wenigstens ein mit dem Zentralmodul gekoppeltes Peripheriegerät umfaßt.

Es ist vorgesehen, daß das Zentralmodul (200) eine Verbindung zu wenigstens einem, einen physikalischen und/oder chemischen Meßwert erfassenden, Sensor (351) aufweist und die von dem wenigstens einen Sensor (351) gelieferten Meßwerte in der Recheneinheit (210) des Zentralmoduls (200) ausgewertet werden und vom Zentralmodul (200) ein vom Meßwert abhängiges Signal generierbar und ausgebbar ist.

## Beschreibung

Die Erfindung betrifft eine Telekommunikationseinrichtung mit den im Oberbegriff des Patentanspruchs 1 genannten Merkmalen sowie deren Verwendung.

### Stand der Technik

Es sind Telekommunikationseinrichtungen bekannt, bei denen Alarmgeber oder -anlagen Verbindungen zu internen oder öffentlichen Telefonnetzen aufweisen. Bekannt sind weiterhin Anlagen zur Übertragung von Telemetriedaten über interne oder öffentliche Telefonnetze. Aus der DE 42 42 855 ist beispielsweise eine Telekommunikationsanlage bekannt, die um Alarmein- und ausgänge erweitert ist. Als beispielhafte Anwendungsmöglichkeit ist aus dem Prospekt "Glätte-Frühmeldesystem GFMS" der Firma ANT Nachrichtentechnik GmbH ANT 1656 10.86 bekannt, meteorologische Daten mittels Sensoren aufzunehmen und zu einer Zentraleinrichtung zu übertragen, wo diese Meßdaten zu einem Glätte-Warnsignal verarbeitet werden. Aus der EP 0 292 639 ist weiterhin ein Verfahren zur Ausgabe eines Vorwarnsignales auf der Basis von Wetterdaten bekannt. Nachteilig an den bekannten Vorrichtungen ist die relativ eingeschränkte Verwendbarkeit, die sich vorwiegend auf die Erfassung meteorologischer Daten beschränkt sowie die mangelnde Variabilität, sowohl hinsichtlich erweiterter Anlagenkonfigurationen als auch alternativen Anwendungsgebieten.

### Vorteile der Erfindung

Die erfindungsgemäße Telekommunikationseinrichtung mit den im Anspruch 1 genannten Merkmalen weist gegenüber bekannten Anlagen den Vorteil einer großen Variabilität zum Einsatz für verschiedenste wählbare Anwendungen auf. Durch Integration der Signalverarbeitung in die Telekommunikationseinrichtung läßt sich in einfacher und kostengünstiger Weise eine in jedem Gebäude, Wohnung, Büro oder dergleichen vorhandene beziehungsweise betriebene Telekommunikationseinrichtung für die Durchführung von Aktionen wie zum Beispiel Licht ein/aus, Heizung ein/aus/wärmer/kälter/Temperatur x und für die Erfassung und Auswertung von Zuständen von Einrichtungen wie physikalischen und/oder chemischen Meßwerten ausnutzen, so daß die Installation zusätzlicher, auf diese Funktionen gerichteter, Einrichtungen nicht notwendig ist. Insbesondere ist eine Modulbauweise vorgesehen, die es erlaubt, die Konfiguration je nach gewünschtem Einsatzzweck anzupassen und/oder zu erweitern.

In einer Grund-Ausführungsform ist lediglich ein Sensor vorgesehen, dessen erfaßtes und an das Zentralmodul der Telekommunikationseinrichtung geliefertes Signal über beliebig große Entfernungen von einem Benutzer oder einem hierzu Befugten abgefragt werden kann. Diese Abfrage kann entweder über ein herkömmliches Endgerät, vorzugsweise einem an sich bekannten Telefonapparat, auf akustischem Wege erfolgen. Bei digitalen Übertragungsverfahren können die Signale in analoger Form digitalisiert (entsprechend der Sprache) oder als digitale Telegramme bei ISDN im B-Kanal (Nutzkanal) oder als Datentelegramm im D-Kanal (Zeichenkanal) übertragen werden. Es ist bevorzugt, wenn die akustische Aufbereitung des Signalwertes in Form einer Sprachausgabe bereits im Zentralmodul, beispielsweise in einer integrierten Recheneinheit, erfolgt. Ebenso möglich ist jedoch auch eine Datenverbindung zu einem optischen Ausgabegerät, beispielsweise einem Monitor, wobei im Zentralmodul eine entsprechend angepaßte Datenaufbereitung erfolgt. Bevorzugte Anwendungen für solche einfachen Konfigurationen können beispielsweise Temperatur- oder Füllstandsüberwachungen, beispielsweise eines Brennstoffvorrates, über größere Entfernungen sein. Auch sind mit mehreren, gegebenenfalls verschiedenen Sensoren eine Vielzahl unterschiedlicher physikalischer und/oder chemischer Meßwerte erfaßbar, die eine komplexe Überwachung, Überprüfung, Beobachtung usw. von Objekten, insbesondere von Gebäuden, beispielsweise Wohn- und/oder Bürogebäuden oder dergleichen gestatten. Eine derartige Konfiguration kann auch eine effektive und zuverlässige Alarmauslösung sicherstellen, beispielsweise als Einbruchsicherung oder als Feuermeldeeinrichtung.

In einer weiteren bevorzugten Ausgestaltung der Telekommunikationseinrichtung können ein oder mehrere Aktoren mit dem Zentralmodul gekoppelt sein, die bestimmte Aktionen in Abhängigkeit von den Sensorsignalen und/oder von entsprechenden Befehlen des Benutzers aus einem Kommunikationsnetz, beispielsweise dem öffentlichen Fernsprechnetz, auslösen können. Durch Speicherung entsprechender Kennfelder in der Recheneinheit des Zentralmoduls können die Aktoren je nach erfaßten Sensorwerten in verschiedener Weise angesteuert werden.

Die Koppelung des Zentralmoduls an ein Kommunikationsnetz, das vorzugsweise ein öffentliches Fernsprechnetz ist, kann auf verschiedene Weise erfolgen. So ist eine Verbindung über elektrische Leitungen, über optische Lichtwellenleitungen oder auf drahtlosem Wege, beispielsweise über Funkverbindung oder Richtfunkverbindung möglich. Die Signalcodierung und -übertragung kann sowohl auf analogem als auch auf digitalem Wege erfolgen.

Die Koppelung der verschiedenen Eingabe-, Erfassungs- und Ausgabegeräte und dergleichen, auch als Peripheriegeräte bezeichnet, mit dem Zentralmodul kann ebenfalls über Datenleitungen oder durch Funkübertragung erfolgen. Von Vorteil ist, wenn das Zentralmodul verschiedene Eingänge, auch als Interfaces bezeichnet, aufweist, über die verschiedene Peripheriegeräte ankoppelbar sind. Als Peripheriegeräte kommen beispielsweise auch Telefon- beziehungsweise Fernsprechapparate oder andere Terminals in Frage. So können Spezialterminals mit dem Zentralmodul durch Funkübertragung kommunizieren, wobei die Spezialterminals mit jeweils verschiedenen Sensoren und/oder Aktoren in Verbindung stehen. Auf diese Weise können unterschiedlichste Meßwerte komplexer Anlagen überwacht werden sowie die Anlagen mittels der Aktoren beeinflußt und gesteuert werden.

Sind mehrere Sensoren und/oder Aktoren an einem festen Ort notwendig, kann es von Vorteil sein, die Verbindungen zu diesen zu bündeln und die Erfassung und Aufbereitung von Sensorsignalen beispielsweise über eine externe Alarmzentrale, die wiederum über Funk oder über eine Datenleitung mit dem Zentralmodul in Verbindung steht, vorzunehmen. Ebenso kann diese Alarmzentrale mit einem oder mehreren Aktoren in Verbindung stehen, die bestimmte Aktionen in Abhängigkeit von in der Recheneinheit des Zentralmoduls enthaltenen Kennfeldparametern und/oder in Abhängigkeit von eingegebenen Signalen über das Fernsprechnetz ausführen.

In einer weiteren vorteilhaften Ausgestaltung ist das Zentralmodul beziehungsweise die Telekommunikationsanlage mit einem weiteren Terminal gekoppelt, das zur erweiterten und/oder flexiblen Programmierung und/oder Zurverfügungstellung von Steuerparametern für die Aktoren dienen kann. Ein derartiges Terminal kann beispielsweise ein Computerterminal oder ein "Multifunktionales Telekommunikationsendgerät" sein, welches zur Kommunikation mit dem Zentralmodul durch manuelle Eingabe oder mittels Steuer- oder Regelprogrammen geeignet ist. Vorzugsweise kommuniziert das Computerterminal mit der Recheneinheit des Zentralmoduls und kann deren Befehlssatz beziehungsweise deren Kennfelder erweitern und je nach Bedarf modifizieren. So können im Computerterminal umfangreiche Regel- und Steueralgorithmen abgespeichert sein, die zur autonomen Steuerung auch komplexer Anlagen geeignet sein können. Dieses Computerterminal ist wiederum geeignet, über externe Schnittstellen eine Erweiterung oder flexible Anpassung seiner Steuer- und Regelalgorithmen zu erfahren.

Die erfindungsgemäße Telekommunikationseinrichtung kann in vorteilhafter Weise für vielfältige und umfassende Überwachungs- und Steuerungsaufgaben eingesetzt werden. Angefangen von relativ einfach zu realisierenden Temperaturüberwachungen mit Erfassung und Auswertung sowie Datenübermittlung über beliebig große Entfernungen über komplexere Klimadatenerfassungen bis hin zu hochkomplexen Anlagenüberwachungen und -steuerungen sind verschiedenste Anwendungen realisierbar. So können in vorteilhafter Weise Klimadaten wie Temperatur, Luftfeuchte, Luftdruck etc. erfaßt und aufbereitet werden, um über ein internes oder ein öffentliches Fernsprechnetz abgefragt und/oder zu einer Steuerungseinrichtung weitergeleitet zu werden.

Ebenso können mit den Sensoren verschiedenste Meßdaten einer komplexen Prozeßsteuerung erfaßt und ausgewertet werden. Die in der Recheneinheit des Zentralmoduls und/oder im Computerterminal gespeicherten Kennfeldparameter können dann zur Ansteuerung von verschiedenen Aktoren verwendet werden, die über Datenleitungen und/oder per Funkübertragung mit dem Zentralmodul beziehungsweise mit der Alarmzentrale gekoppelt sind. Auf diese Weise können komplexe Prozesse vollautomatisch ablaufen und gleichzeitig auf einfache Weise über ein öffentliches Telekommunikationsnetz überwacht und bei Bedarf beeinflußt werden.

In einer weiteren vorteilhaften Ausgestaltung können zwei oder mehrere der beschriebenen Telekommunikationseinrichtung zu einer Struktur zusammengekoppelt werden, womit dann auch großflächige Steuer- und Überwachungsaufgaben, beispielsweise in aus mehreren Einheiten bestehenden Gebäudekomplexen, bewältigt werden können.

Weitere vorteilhafte Ausgestaltungen der Erfindung ergeben sich aus den übrigen, in den Unteransprüchen genannten, Merkmalen.

### Zeichnungen

Die Erfindung wird nachfolgend in einem Ausführungsbeispiel anhand der zugehörigen Zeichnung, die ein schematisches Blockschaltbild einer Telekommunikationseinrichtung zeigt, erläutert.

### Beschreibung des Ausführungsbeispiels

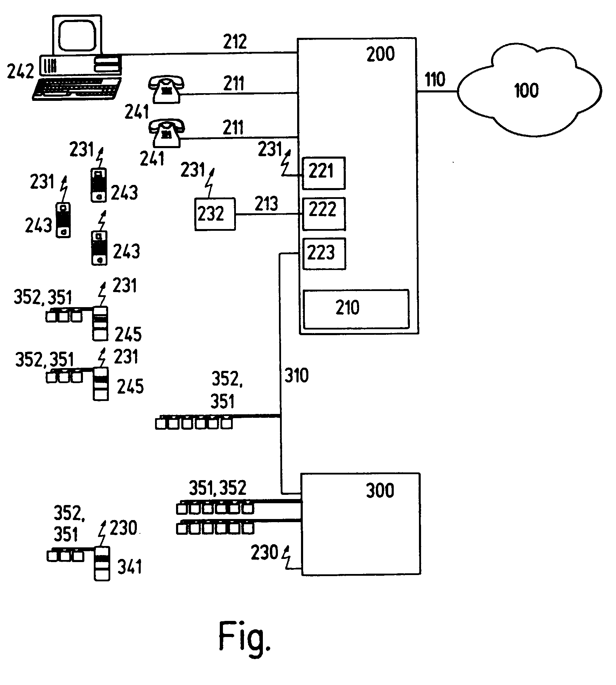

Die Figur zeigt in einem schematischen Blockschaltbild den Aufbau und die Verschaltung einer erfindungsgemäßen Telekommunikationseinrichtung, bestehend aus einer mit einem Kommunikationsnetz 100 verbundenen Zentrale sowie mehreren mit dieser Zentrale gekoppelten Peripheriegeräten. Die Zentrale, die beispielsweise eine autonome, das heißt selbständige beziehungsweise alleinstehende, Telekommunikationsanlage oder auch eine Baugruppe unter mehreren in einem größeren Kommunikationsverbund sein kann, wird im folgenden als Zentralmodul 200 bezeichnet. Das Zentralmodul 200 kann in einer sogenannten Insellösung ausschließlich als Schaltzentrale zur Verbindung beispielsweise innerhalb eines Hauses oder eines Firmenverbundes fungieren, weist zweckmäßigerweise jedoch wenigstens eine Verbindung beziehungsweise Datenleitung 110 zu einem internen und/oder öffentlichen Kommunikationsnetz 100 auf. Die Verbindung 110 kann beispielsweise ein B-Kanal oder ein D-Kanal bei einer ISDN-Verbindung sein. Ferner kann ein S₀-Bus (zwei B- und 1 D-Kanal) genutzt werden. Weitere Möglichkeiten sind Lichtwellenleiterverbindungen oder analoge Leitungen. Anstatt der Datenleitung 110 kann jedoch die Verbindung zu einem Kommunikationsnetz ebenso mittels einer Funkübertragung, beispielsweise über eine Richtfunkstrecke, gewährleistet sein. An das Zentralmodul 200 können ein oder mehrere sogenannte leitungsgebundene Telekommunikationsendgeräte, im folgenden als Fernsprechapparate 241 bezeichnet, über Datenleitungen 211 angeschlossen sein.

An das Zentralmodul 200 können weitere Endgeräte, wie beispielsweise ein Multikommunikationsterminal zur Datenverarbeitung, ein Personalcomputer, eine Rechenanlage oder dergleichen, angeschlossen sein. Im dargestellten Ausführungsbeispiel ist zu diesem Zweck ein als Computerterminal beziehungsweise Multifunktionales Telekommunikationsendgerät 242 bezeichnetes Endgerät über eine Datenleitung 212 mit dem Zentralmodul 200 verbunden.

Weiterhin kann das Zentralmodul 200 Sonderfunktionen, beispielsweise wenigstens einen Funkanschluß 221, aufweisen. Dieser kann nach beliebigem Standard codiert sein. Die Abstrahlung beziehungsweise Aussendung von codierten Funksignalen aus dem Zentralmodul 200 sowie der Empfang von Funksignalen ist durch jeweils einen Pfeil 231 verdeutlicht. Hierdurch kann das Zentralmodul 200 mit mehreren verschiedenen Terminals kommunizieren. Als Terminals kommen beispielsweise Funktelefone, im folgenden als Funkterminals 243 bezeichnet, oder Spezialterminals 245 in Frage. Als Funkterminals 243 kommen vorzugsweise an sich bekannte Funktelefone mit einer Einrichtungen zum gleichzeitigen Aussenden und Empfangen von akustischen Signalen, beispielsweise menschliche Sprache oder sonstige akustische Codes, zur Verwendung. Als Spezialterminals 245 werden im folgenden solche Funkterminals bezeichnet, über die nicht nur mit dem Zentralmodul 200 durch Sprache oder andere Codierung kommuniziert werden kann, sondern die darüber hinaus oder stattdessen mit wenigstens einen Sensor 351 und/oder wenigstens einem Aktor 352 gekoppelt sind. Die Spezialterminals 245 bilden somit kleinere Einheiten selbständiger Meßwerterfassungsstellen mit zugeordneten Sensoren 351 und/oder Stelleinrichtungen mit zugeordneten Aktoren 352.

Zum Zweck einer flächendeckenden Funkversorgung kann es vorteilhaft sein, am Zentralmodul 200 einen weiteren Anschluß vorzusehen, über den räumlich entfernte Funkmodule 232 über eine Datenleitung 213 mit dem Zentralmodul 200 verbunden sein können. Ein solcher weiterer Anschluß ist im folgenden als Interface 222 bezeichnet.

Das Zentralmodul 200 weist darüber hinaus eine zentrale Steuerung auf, die für den Ablauf aller internen Funktionen sowie die Verwaltung und Steuerung aller Kommunikationsverbindungen, das heißt für die Funkverbindungen 231 sowie für alle Datenleitungen 110, 211, 212, 213 verantwortlich ist. Diese Steuerung kann beispielsweise ein interner oder auch ein extern angekoppelter Rechner sein und ist im folgenden als Steuereinheit 210 bezeichnet.

Im dargestellten Ausführungsbeispiel ist ein weiterer Kommunikationsanschluß, das heißt ein weiteres Interface 223, am Zentralmodul 200 vorgesehen, das über eine Datenleitung 310 eine Verbindung des Zentralmoduls 200 zu Sensoren 351 und/oder Aktoren 352 herstellen kann. Die Verbindung 310 kann beispielsweise als ein Bussystem, ein Home-Bus oder ein sogenannter USB-Bus ausgeführt sein. Dargestellt ist weiterhin eine optional vorhandene Alarmzentrale 300, die über die Datenleitung 310 in direkter Verbindung mit dem Zentralmodul 200 steht. In dieser Alarmzentrale 300 können zusätzliche Auswerteschaltungen und Recheneinheiten zur Datenerfassung und -aufbereitung der von den Sensoren 351 gelieferten Daten vorgesehen sein. Ebenso ist über die Alarmzentrale 300 die Ansteuerung eines oder mehrerer Aktoren 352 möglich. Ebenso können die Funkterminals 243 Schnittstellen zu Sensoren 351 und Aktoren 352 aufweisen. Weiterhin können Spezialterminals 341 vorgesehen sein, die jeweils über Funkverbindungen 230 direkt mit der Alarmzentrale 300 kommunizieren und eigene Schnittstellen zu Sensoren 351 und/oder Aktoren 352 aufweisen.

Über alle beschriebenen Verbindungen zwischen den Einzelteilen der Kommunikationseinrichtung können die Datenübertragungen sowohl auf analogem als auch auf digitalem Wege (beispielsweise ISDN, analog oder V.24) erfolgen.

Die Sensoren 351 können verschiedene Arten von Zuständen erfassen, beispielsweise Licht, Temperatur, Gas, Rauch, Feuer, Bewegung, etc. Komplexere Sensoren 351 können Zählerstände wie Gas-, Wasser-, Energie-, Elektrizität-, Ölstand und so weiter erfassen. Als Aktoren 352 kommen Stellglieder wie Tür-, Rolladenschließer, Schalter, etc. in Frage. Auch visuelle Informationen können über spezielle Kameras am Bussystem übertragen werden. Hierzu sind die Multikommunikationsterminals 242 geeignet, da sie zum Beispiel für Bildkommunikation bereits mindestens eine Kamera enthalten.

In der Steuerung 210 und/oder in der Alarmanlage werden auf Grund eines von einem Sensor 351 gemeldeten Zustandswechsel Aktionen ausgelöst, beispielsweise die Ansteuerung eines Aktors 352, Alarmsignale, Aufbau einer Fernsprechverbindung oder eine Übertragung von Informationen zu einem dem Ereignis zugeordneten Teilnehmer. Mittels der an das Zentralmodul 200 angeschlossenen Terminals, nämlich Fernsprechapparate 241, Computerterminal 242 und Funkterminals 243, können Betriebszustände oder Meßwerte der Sensoren abgefragt und mittels der Aktoren Funktionen ausgeführt werden.

Weiterhin können die von den Sensoren 351 gemeldeten und in der Steuereinheit 210 des Zentralmoduls 200 beziehungsweise im Computerterminal 242 aufbereiteten Informationen über die Datenleitung 110 in das Kommunikationsnetz 100 weitergeleitet werden, wodurch eine Kommunikation über beliebig große Entfernungen möglich ist. So ist beispielsweise die vollständige Überwachung und Steuerung komplexer Anlagen aus großer Distanz möglich, ohne daß sich notwendigerweise in der Anlage Bedienpersonal aufhalten muß.

Eine weitere mögliche Anwendung ist die Überwachung und Verkehrslenkung für umfangreiche Straßen- und Autobahnabschnitte. So können als Sensoren 351 beispielsweise Temperatur- und Feuchtigkeitssensoren zum Einsatz kommen, die bei Gefahr von Straßenglätte geeignete Aktoren 352 ansteuern, was beispielsweise Wechselanzeigen für eine zulässige Höchstgeschwindigkeit oder in die Fahrbahn eingebaute Heizeinrichtungen sein können.

## Patentansprüche

1. Telekommunikationseinrichtung, die wenigstens ein lokales Zentralmodul, eine Recheneinheit und wenigstens ein mit dem Zentralmodul gekoppeltes Peripheriegerät umfaßt, **dadurch gekennzeichnet,** daß das Zentralmodul (200) eine Verbindung zu wenigstens einem, einen physikalischen und/oder chemischen Meßwert erfassenden, Sensor (351) aufweist und die von dem wenigstens einen Sensor (351) gelieferten Meßwerte in der Recheneinheit (210) des Zentralmoduls (200) ausgewertet werden und vom Zentralmodul (200) ein vom Meßwert abhängiges Signal generierbar und ausgebbar ist.

2. Telekommunikationseinrichtung nach Anspruch 1, **dadurch gekennzeichnet,** daß das Zentralmodul (200) mit wenigstens einem Aktor (352) gekoppelt ist, der in Abhängigkeit der von dem wenigstens einen Sensor (351) gelieferten Signale und/oder in Abhängigkeit weiterer benutzerbestimmter Parameter steuerbar ist.

3. Telekommunikationseinrichtung nach Anspruch 2, **dadurch gekennzeichnet,** daß das Zentralmodul (200) mit einem Kommunikationsnetz (100) gekoppelt ist.

4. Telekommunikationseinrichtung nach Anspruch 3, **dadurch gekennzeichnet,** daß das Zentralmodul (200) über eine Datenleitung (110) mit dem Kommunikationsnetz (100) gekoppelt ist.

5. Telekommunikationseinrichtung nach Anspruch 3, **dadurch gekennzeichnet,** daß das Zentralmodul (200) über eine Funkverbindung mit dem Kommunikationsnetz (100) gekoppelt ist.

6. Telekommunikationseinrichtung nach einem der vorhergehenden Ansprüche, **dadurch gekennzeichnet,** daß das Zentralmodul (200) mit wenigstens einem Fernsprechapparat (241) über jeweils eine Datenleitung (211) gekoppelt ist.

7. Telekommunikationseinrichtung nach einem der vorhergehenden Ansprüche, **dadurch gekennzeichnet,** daß am Zentralmodul (200) wenigstens ein Interface (221) zur Kommunikation mit weiteren Peripheriegeräten über eine Funkverbindung (231) vorgesehen ist.

8. Telekommunikationseinrichtung nach einem der vorhergehenden Ansprüche, **dadurch gekennzeichnet,** daß am Zentralmodul (200) wenigstens ein Interface (222) zum Anschluß einer Datenleitung (213) zur Verbindung mit einem Funkterminal (232) zur Kommunikation mit weiteren Peripheriegeräten über eine Funkverbindung (231) vorgesehen ist.

9. Telekommunikationseinrichtung nach einem der vorhergehenden Ansprüche, **dadurch gekennzeichnet,** daß am Zentralmodul (200) wenigstens ein Interface (223) zum Anschluß wenigstens einer Datenleitung (310) zur Verbindung mit wenigstens einem Sensor (351) vorgesehen ist.

10. Telekommunikationseinrichtung nach einem der vorhergehenden Ansprüche, **dadurch gekennzeichnet,** daß über das Interface (223) und die Datenleitung (310) wenigstens ein Aktor (352) mit dem Zentralmodul (200) koppelbar ist.

11. Telekommunikationseinrichtung nach Anspruch 10, **dadurch gekennzeichnet,** daß der wenigstens eine Aktor (352) in Abhängigkeit von in der Recheneinheit (210) des Zentralmoduls (200) gespeicherten Kennfelddaten ansteuerbar ist.

12. Telekommunikationseinrichtung nach einem der vorhergehenden Ansprüche, **dadurch gekennzeichnet,** daß mit dem Zentralmodul (200) über eine Datenleitung (212) wenigstens ein multifunktionales Computer-terminal (242) gekoppelt ist.

13. Telekommunikationseinrichtung nach Anspruch 12, **dadurch gekennzeichnet,** daß das Computerterminal (242) zur erweiterten Steuerung des Zentralmoduls (200) einsetzbar ist.

14. Telekommunikationseinrichtung nach Anspruch 13, **dadurch gekennzeichnet,** daß der wenigstens eine Aktor (352) in Abhängigkeit von in der Recheneinheit (210) des Zentralmoduls (200) und/oder von im multifunktionalen Computerterminal (242) gespeicherten Kennteiddaten ansteuerbar ist.

15. Telekommunikationseinrichtung nach einem der vorhergehenden Ansprüche, **dadurch gekennzeichnet,** daß das mit dem Zentralmodul (200) über Datenleitung (213) gekoppelte Funkterminal (232) über eine Funkverbindung (231) mit wenigstens einem weiteren Funkterminal (243) kommunizieren kann.

16. Telekommunikationseinrichtung nach einem der vorhergehenden Ansprüche, **dadurch gekennzeichnet,** daß das mit dem Zentralmodul (200) über Datenleitung (213) gekoppelte Funkterminal (232) über eine Funkverbindung (231) mit wenigstens einem weiteren Spezialterminal (245) kommunizieren kann.

17. Telekommunikationseinrichtung nach Anspruch 16, **dadurch gekennzeichnet,** daß das wenigstens eine Spezialterminal (245) mit wenigstens einem Sensor (351) und/oder wenigstens einem Aktor (352) gekoppelt ist und eine Funkverbindung (231) zum Funkterminal (232) aufweist.

18. Telekommunikationseinrichtung nach einem der vorhergehenden Ansprüche, **dadurch gekennzeichnet,** daß am Interface (223) des Zentralmoduls (200) über die Datenleitung (310) eine Alarmzentrale (300) angeschlossen ist.

19. Telekommunikationseinrichtung nach Anspruch 18, **dadurch gekennzeichnet,** daß die Alarmzentrale (300) mit wenigstens einem Sensor (351) gekoppelt ist.

20. Telekommunikationseinrichtung nach Anspruch 18, **dadurch gekennzeichnet,** daß die Alarmzentrale (300) mit wenigstens einem Aktor (352) gekoppelt ist.

21. Telekommunikationseinrichtung nach Anspruch 18, **dadurch gekennzeichnet,** daß die Alarmzentrale (300) mit wenigstens einem Sensor (351) und mit wenigstens einem Aktor (352) gekoppelt ist.

22. Telekommunikationseinrichtung nach einem der vorhergehenden Ansprüche, **dadurch gekennzeichnet,** daß die mit dem Zentralmodul (200) über die Datenleitung (310) gekoppelte Alarmzentrale (300) über eine Funkverbindung (231) mit wenigstens einem weiteren Funkterminal (243) kommunizieren kann.

23. Telekommunikationseinrichtung nach einem der vorhergehenden Ansprüche, **dadurch gekennzeichnet,** daß die mit dem Zentralmodul (200) über Datenleitung (310) gekoppelte Alarmzentrale (300) über eine Funkverbindung (231) mit wenigstens einem weiteren Spezialterminal (245) kommunizieren kann.

24. Telekommunikationseinrichtung nach einem der vorhergehenden Ansprüche, **dadurch gekennzeichnet,** daß die mit dem Zentralmodul (200) über Datenleitung (310) gekoppelte Alarmzentrale (300) über eine Funkverbindung (230) mit wenigstens einem weiteren Spezialterminal (341) kommunizieren kann.

25. Telekommunikationseinrichtung nach Anspruch 24, **dadurch gekennzeichnet,** daß das wenigstens eine Spezialterminal (341) mit wenigstens einem Sensor (351) und/oder wenigstens einem Aktor (352) gekoppelt ist und eine Funkverbindung (230) zur Alarmzentrale (300) aufweist.

26. Telekommunikationseinrichtung nach einem der vorhergehenden Ansprüche, **dadurch gekennzeichnet,** daß wenigstens zwei Zentralmodule (200) zur Bildung einer größeren Einheit mit ihrer jeweils zugehörigen Peripherie gekoppelt sind.

27. Verwendung mindestens einer der Telekommunikationseinrichtungen nach Anspruch 1 bis 26 zur Temperaturerfassung und -auswertung.

28. Verwendung nach Anspruch 27, **dadurch gekennzeichnet,** daß der wenigstens eine mit dem Zentralmodul (200) gekoppelte Sensor (351) zur Temperaturerfassung dient und daß die erfaßte Temperatur über die Datenleitung (110) im öffentlichen Netz (100) abfragbar ist.

29. Verwendung mindestens einer der Telekommunikationseinrichtungen nach Anspruch 1 bis 26 zur Klimaerfassung und -auswertung.

30. Verwendung nach Anspruch 29, **dadurch gekennzeichnet,** daß wenigstens drei mit dem Zentralmodul (200) gekoppelte Sensoren (351) einer Temperatur-, Luftfeuchte und Luftdruckerfassung dienen und daß die erfaßten Werte über die Datenleitung (110) im öffentlichen Netz (100) abfragbar sind.

31. Verwendung mindestens einer der Telekommunikationseinrichtungen nach Anspruch 1 bis 26 zur Prozeßüberwachung und/oder -steuerung einer Gebäudeinstallation oder dergleichen dient.

32. Verwendung nach Anspruch 31, **dadurch gekennzeichnet,** daß der wenigstens eine mit dem Zentralmodul (200) gekoppelte Sensor (351) zur Prozeßüberwachung dient und daß der erfaßte Wert über die Datenleitung (110) im öffentlichen Netz (100) abtragbar ist.

33. Verwendung nach Anspruch 32, **dadurch gekennzeichnet,** daß mit dem Zentralmodul (200) wenigstens ein Aktor (352) gekoppelt ist, der in Abhängigkeit vom Signal des wenigstens einen Sensors (351) und/oder von in der Recheneinheit (210) voreingestellten Kennfeldparametern und/oder von über die Datenleitung (110) gelieferten Signalen steuerbar ist.

34. Verwendung nach Anspruch 33, **dadurch gekennzeichnet,** daß mit dem Zentralmodul (200) eine Vielzahl von Sensoren (351) und Aktoren (352) gekoppelt sind, wobei die Aktoren in Abhängigkeit von den Signalen der Sensoren (351) und/oder von in der Recheneinheit (210) voreingestellten Kennfeldparametern und/oder von über die Datenleitung (110) gelieferten Signalen steuerbar sind.

35. Verwendung nach Anspruch 33, **dadurch gekennzeichnet,** daß mit dem Zentralmodul (200) eine vielzahl von Sensoren (351) und Aktoren (352) gekoppelt sind, wobei die Aktoren in Abhängigkeit von den Signalen der Sensoren (351) und/oder von in der Recheneinheit (210) voreingestellten Kennfeldparametern und/oder von über die Datenleitung (110) gelieferten Signalen steuerbar sind.

36. Verwendung nach Anspruch 33, **dadurch gekennzeichnet,** daß mit dem Zentralmodul (200) eine Vielzahl von Sensoren (351) und Aktoren (352) gekoppelt sind, wobei die Aktoren in Abhängigkeit von den Signalen der Sensoren (351) und/oder von in der Recheneinheit (210) voreingestellten Kennfeldparametern und/oder von im Computerterminal (242) voreingestellten Kennfeld- und/oder Programmparametern und/oder von über die Datenleitung (110) gelieferten Signalen steuerbar sind.
